# EUROPEAN PATENT APPLICATION

(11) **EP 3 441 131 A1**
(43) Date of publication of application: **13.02.2019**
(21) Application number: 16897891.4
(22) Date of filing: 06.04.2016
(51) Int. Cl.: B01D 65/10, B01D 61/12, C02F 1/44

(54) **WATER TREATMENT DEVICE PERFORMANCE EVALUATION METHOD AND WATER TREATMENT DEVICE**

(71) Applicant: Mitsubishi Heavy Industries Engineering, Ltd., Nishi-ku, Yokohama-shi, Kanagawa 2208401 (JP)
(72) Inventor: SAKURAI Hideaki, Tokyo 108-8215 (JP); UKAI Nobuyuki, Tokyo 108-8215 (JP); SUZUKI Hideo, Tokyo 108-8215 (JP); NAKASHOJI Hiroshi, Tokyo 108-8215 (JP)
(74) Representative: Henkel, Breuer & Partner
(86) International application number: PCT/JP2016/061252
(87) International publication number: WO 2017/175333

(57) **Abstract**

Provided is a method for evaluating performance of a water treatment device provided with a plurality of main vessels that are arranged in parallel to each other and that each have a reverse osmosis film for separating to-be-treated water into concentrated water and permeate water, the method comprising: a specification step (S1) for specifying, as a target vessel, a main vessel having the highest concentration rate among the plurality of main vessels; and a detection step (S2) for detecting an index regarding the likelihood of scale precipitation to-be-detected water that has a concentration corresponding to that of the concentrated water discharged from the target vessel.

## Description

### [Technical Field]

The present invention relates to a water treatment device performance evaluation method and a water treatment device.

### [Background Art]

Salts and other inorganic components are contained in treated water generated by desalination of seawater or treatment of industrial wastewater. When discharging such treated water to the outside, in order to reduce the influence on the environment, a treatment for removing the aforementioned components is applied. More specifically, in the desalination of seawater, permeable water as fresh water can be obtained by removing salinity or other inorganic substances from seawater. Also, in industrial wastewater treatment, the amount of effluent is reduced by concentrating salinity or other inorganic substances. As a device for performing such a treatment, for example, a device using a reverse osmosis membrane (RO membrane) is known from the related art. Water to be treated is separated into concentrated water containing the above components and permeable water, using the RO membrane. Both the concentrated water and the permeable water are processed by separately provided devices.

When such an RO membrane is used for a long time or when concentration fluctuation occurs in the water to be treated, in some cases, the impurities or inorganic components contained in the impurities may crystallize and adhere as scale to the surface of the RO membrane. When the scales are precipitated, an apparent filtration area of the RO membrane decreases, and the desired performance cannot be maintained. Therefore, a method for detecting performance deterioration of the RO membrane is desired.

As an example of such a technique, a technique described in Patent Literature 1 below is known. The desalination device described in Patent Literature 1 includes a membrane separation device, a concentrated water supply line which extracts the concentrated water from the membrane separation device, and a monitoring separation membrane provided in the concentrated water supply line. The presence or absence of scale precipitation in the membrane separation device can be determined on the basis of the precipitation amount of scale in the monitoring separation membrane.

### [Citation List]

### [Patent Literature]

### [Patent Literature 1]

Japanese Patent No. 5398695

### [Summary of Invention]

### [Technical Problem]

In an actual membrane separation device, a plurality of vessels having an RO membrane are generally provided. Furthermore, in the vessels, it is known that performance differences (variation in water permeation performance, etc.) due to individuals occur depending on the state at the time of manufacturing and the properties of the material. However, in the technique described in the above-mentioned Patent Literature 1, performance differences for individual RO membranes are not taken into consideration. Therefore, in reality, in spite of the existence of an RO membrane on which scale has precipitated, in some cases, this may not be accurately detected.

The present invention has been made to solve the above problems, and an object of the present invention is to provide a method for evaluating the performance of a water treatment device capable of more accurately evaluating performance, and a water treatment device.

### [Solution to Problem]

A method for evaluating the performance of a water treatment device according to a first aspect of the present invention is a method for evaluating the performance of a water treatment device including a plurality of main vessels arranged in parallel to each other and having a reverse osmosis membrane configured to separate water to be treated into concentrated water and permeable water, the method including: a selection step of selecting a main vessel having the highest concentration among the plurality of main vessels as a target vessel; and a detecting step of detecting an index of likelihood of precipitation of scale in water on which detection is to be performed having a concentration corresponding to a concentration of the concentrated water discharged from the target vessel.

According to this method, in the specifying step, the main vessel having the highest concentration rate among the plurality of main vessels is specified as the target vessel. Here, it is possible to determine that a higher load is applied to the target vessel than other main vessels. That is, scale is most easily precipitated in the target vessel among the plurality of main vessels. In other words, the concentration of the concentrated water increases.

Therefore, in the subsequent detecting step, an index of the precipitation ease of scale in the water to be detected discharged from the target vessel is detected.

In this way, among the plurality of main vessels, the main vessel (the target vessel), in which the concentration rate is highest (scale is most easily precipitated), is identified, and the index of the precipitation ease of scale in the target vessel is monitored. Thus, the likelihood of precipitation of scale can be detected at an early stage.

In particular, even when there is a difference in performance (variation of concentration rate) between a plurality of main vessels, by specifying the main vessel (target vessel) in which scale is most easily precipitated, it is possible to easily predict a timing when the scale will begin to precipitate in the main vessel other than the target vessel.

According to a second aspect of the present invention, in the method for evaluating the performance of the water treatment device according to the first aspect, the water to be detected may be concentrated water discharged from the target vessel.

According to this method, since the concentrated water discharged from the target vessel is directly used as the water to be detected, it is possible to more easily predict precipitation of the scale.

According to a third aspect of the present invention, the method for evaluating the performance of the water treatment device according to the first aspect further includes a re-concentration step of re-concentrating the concentrated water which is discharged from the plurality of main vessels and mixed, wherein the water to be detected may be re-concentrated water obtained in the re-concentration step.

According to this method, the concentrated water discharged from the plurality of main vessels is temporarily mixed, but the water to be detected can be easily obtained by re-concentrating the concentrated water in the re-concentration step.

According to a fourth aspect of the present invention, in the method for evaluating the performance of the water treatment device according to the third aspect, in the re-concentration step, the concentration of the re-concentrated water may be adjusted by changing at least one of a pressure and a flow rate when the concentrated water is concentrated again.

According to this method, it is possible to easily and accurately adjust the concentration of re-concentrated water simply by changing at least one of the pressure and the flow rate at the time of re-concentration of the concentrated water.

According to a fifth aspect of the present invention, in the method for evaluating the performance of the water treatment device according to the third aspect, in the re-concentration step, the concentration of the re-concentrated water may be adjusted by changing at least one of a pressure and a flow rate when the concentrated water is concentrated again.

According to this method, since the vessel (re-concentration vessel) for re-concentrating the concentrated water is provided independently, re-concentrated water can be generated with higher accuracy, for example, as compared with a case where re-concentration and detection are performed at the same time in the subsequent detecting step.

According to a sixth aspect of the present invention, in the performance evaluation method for a water treatment device according to any one of the first to fifth aspects, in the specifying step, the target vessel may be specified on the basis of the flow rate of the concentrated water concentrated in each of the main vessels or the flow rate of the permeable water separated by the main vessels.

According to this method, it is possible to easily specify the target vessel on the basis of the flow rate of the concentrated water.

According to a seventh aspect of the present invention, in the performance evaluation method for a water treatment device according to any one of the first to fifth aspects, in the specifying step, the target vessel may be specified on the basis of the electrical conductivity of the concentrated water concentrated in each of the main vessels.

According to this method, it is possible to easily specify the target vessel on the basis of the electric conductivity of the concentrated water.

According to an eighth aspect of the present invention, in the method for evaluating the performance of the water treatment device according to any one of the first to seventh aspects, the index may be the flow rate of the water to be detected.

According to this method, it is possible to easily detect the precipitation ease of scale on the basis of the change in the flow rate of the concentrated water as the water to be detected. For example, when the flow rate of the water to be detected decreases, it is possible to detect that the precipitation ease of the scale increases.

According to a ninth aspect of the present invention, in the method for evaluating the performance of the water treatment device according to any one of the first to seventh aspects, the index may be the density of the water to be detected.

According to this method, it is possible to easily detect the precipitation ease of scale on the basis of the change in the density of the concentrated water as the water to be detected. For example, when the density of the water to be detected decreases, it is possible to detect that the precipitation ease of the scale has increased.

According to a tenth aspect of the present invention, a water treatment device is provided, including: a plurality of main vessels disposed in parallel to each other and having a reverse osmosis membrane configured to separate water to be treated into concentrated water and permeable water; a selection unit which selects a main vessel having the highest concentration rate among the respective main vessels as a target vessel; and a detection unit which detects an index of precipitation ease of scale in the concentrated water discharged from the target vessel.

According to this configuration, the main vessel having the highest concentration rate can be selected as the target vessel by the selection unit. Furthermore, since an index of the precipitation ease of scale in the concentrated water discharged from the target vessel is detected, the possibility of precipitation of scale can be detected at an early stage.

In particular, even when there is a difference in performance (variation of concentration rate) between a plurality of main vessels, by specifying the main vessel (target vessel) in which scale is most easily precipitated, it is possible to easily predict a timing when the scale begins to precipitate in the main vessel other than the target vessel.

According to an eleventh aspect of the present invention, a water treatment device is provided, including: a plurality of main vessels disposed in parallel to each other and having a reverse osmosis membrane configured to separate water to be treated into concentrated water and permeable water; a re-concentration unit which re-concentrates concentrated water, which is discharged from the plurality of main vessels and is mixed, to a concentration corresponding to a concentration of the concentrated water discharged from the main vessel having the highest concentration among the main vessels, thereby generating re-concentrated water; and a detection unit which detects an index of precipitation ease of scale in the re-concentrated water, wherein the re-concentrated unit has a re-concentration vessel which has a reverse osmosis membrane and generates the re-concentrated water, and a first concentration-adjusting unit which adjusts the concentration of the re-concentrated water, by changing at least one of a supply pressure and a flow rate of the concentrated water with respect to the re-concentration vessel.

According to this configuration, it is possible to easily obtain concentrated water having the concentration corresponding to the concentrated water of the target vessel, by adjusting the concentration of re-concentrated water using the first concentration-adjusting unit. Further, according to this configuration, since the vessel (re-concentration vessel) for re-concentrating the concentrated water is provided independently, re-concentrated water can be generated with higher accuracy, for example, as compared with a case where re-concentration and detection are performed at the same time in the subsequent detecting step.

According to a twelfth aspect of the present invention, a water treatment device is provided, including: a plurality of main vessels disposed in parallel to each other and having a reverse osmosis membrane configured to separate water to be treated into concentrated water and permeable water; a concentration detection unit which mixes the concentrated water discharged from the plurality of main vessels, then re-concentrates the mixed concentrated water to discharge the re-concentrated water, and detects an index of precipitation ease of scale in the re-concentrated water; and a second concentration-adjusting unit which adjusts a concentration of the concentrated water by changing at least one of a pressure and a flow rate of the concentrated water to the concentration detection unit.

According to this configuration, the adjustment of concentration of the concentrated water and detection of the index of the precipitation ease of the scale can be simultaneously performed by the concentration detection unit. That is, by simplifying the configuration of the device, manufacturing costs and maintenance costs can be reduced.

### [Advantageous Effects of Invention]

According to the present invention, it is possible to provide a method for evaluating the performance of a water treatment device capable of more accurately evaluating the performance, and a water treatment device.

### [Brief Description of Drawings]

Fig. 1 is an overall view illustrating a water treatment device according to a first embodiment of the present invention.
Fig. 2 is a flowchart illustrating a method for evaluating the performance of a water treatment device according to the first embodiment of the present invention.
Fig. 3 is an overall view illustrating a modified example of the water treatment device according to the first embodiment of the present invention.
Fig. 4 is an overall view illustrating a water treatment device according to a second embodiment of the present invention.
Fig. 5 is a flowchart illustrating a method for evaluating the performance of a water treatment device according to the second embodiment of the present invention.
Fig. 6 is an overall view illustrating a water treatment device according to a third embodiment of the present invention.
Fig. 7 is a flowchart illustrating a method for evaluating the performance of a water treatment device according to the third embodiment of the present invention.
Fig. 8 is a diagram illustrating a specific example of the arrangement of a flow rate meter in each embodiment of the present invention.
Fig. 9 is a diagram illustrating a modified example of the water treatment device according to the second embodiment of the present invention.

### [Description of Embodiments]

### [First Embodiment]

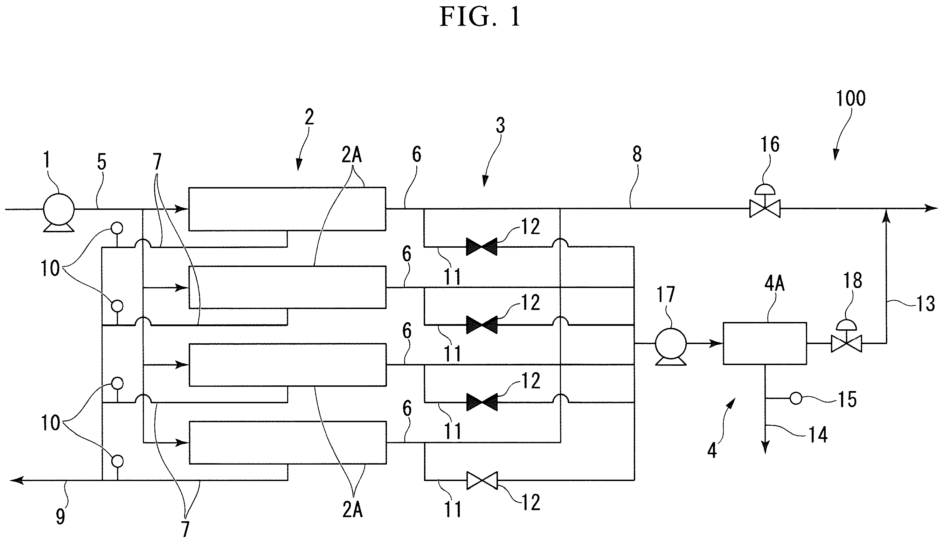

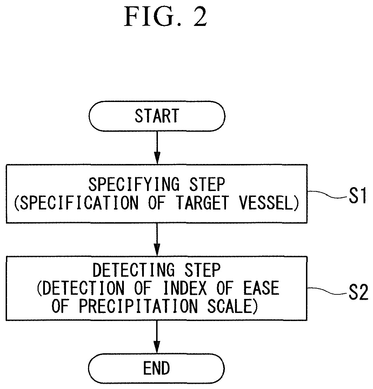

A first embodiment of the present invention will be described with reference to Figs. 1 and 2. As illustrated in Fig. 1, a water treatment system 100 according to this embodiment includes a water-feeding pump 1, a membrane separation unit 2, a selection section 3, and a detection unit 4.

The water treatment device 100 is a device which performs a desalination treatment on water to be treated discharged from another facility (not illustrated). The water to be treated guided from the upstream side by the water-feeding pump 1 is subjected to the desalination treatment in the membrane separation unit 2, then sent to the downstream side, and stored in storage facility (not illustrated) or discharged to the outside.

The water-feeding pump 1 is provided on an introduction line 5 which guides the water to be treated from other equipment (not illustrated). The membrane separation unit 2 is provided on the downstream side of the water-feeding pump 1. The membrane separation unit 2 includes a plurality of main vessels 2A. In Fig. 1, a configuration including four main vessels 2A is illustrated. The four main vessels 2A are arranged in parallel with each other. That is, the water to be treated flowing through the introduction line 5 is split into four for the four main vessels 2A.

Each main vessel 2A is equipped with a reverse osmosis membrane (RO membrane) that separates the water to be treated into concentrated water and permeable water. That is, by causing the water to be treated containing impurities such as salinity to pass through the reverse osmosis membrane, concentrated water in which the impurity-containing components are concentrated is generated. The component (permeable water) of the water to be treated except the concentrated water permeable waters through the reverse osmosis membrane.

Further, in each main vessel 2A, a concentrated water line 6 for extracting the concentrated water and a permeable water line 7 for extracting the permeable water are provided. That is, in the present embodiment, four concentrated water lines 6 and four permeable water lines 7 extend from the four main vessels 2A, respectively. End portions on the downstream side of the four concentrated water lines 6 are all connected to an upstream side end portion of a first water collection line 8. As a result, the concentrated water flowing in the four concentrated water lines 6 mixes in the first water collection line 8 and then flows toward the downstream side.

Likewise, the end portions of the downstream side of the four permeable water lines 7 are connected to the upstream side end portion of the second water collection line 9. As a result, the permeable water flowing on the four permeable water lines 7 mixes on the second water collection line 9 and then flows toward the downstream side. A flow rate meter 10 for measuring the flow rate of the permeable water is provided on each permeable water line 7.

Furthermore, on each of the four concentrated water lines 6, an extraction line 11 for extracting a part of the concentrated water from the concentrated water line 6 is provided. One on-off valve 12 is provided in each one of the extraction lines 11. When the on-off valve 12 is closed, concentrated water does not flow into the extraction line 11. On the other hand, when the on-off valve 12 is opened, a part of the concentrated water flows into the extraction line 11. Furthermore, the end portions of the downstream side of the four extraction lines 11 are all connected to a detection unit 4 (to be described later). That is, the four on-off valves 12 function as the selection unit 3 which selects an arbitrary one main vessel 2A among the four main vessels 2A as a target vessel and connects the main vessel 2A to the detection unit 4.

A detection vessel 4A as a detection unit 4 is provided on the downstream side of the extraction line 11. Like the main vessel 2A, the detection vessel 4A has a reverse osmosis membrane inside. That is, the concentrated water (the concentrated water flowing through the extraction line 11) introduced from the upstream side to the detection vessel 4A is separated again by the reverse separation membrane to generate secondary concentrated water and secondary permeable water. The secondary concentrated water is returned into the first water collection line 8 through a reflux line 13. The secondary permeable water is sent to an external storage facility or the like through the secondary permeable water line 14. A flow rate meter 15 for measuring the flow rate of the secondary permeable water is provided on the secondary permeable water line 14.

Furthermore, in this embodiment, a pressure-adjusting valve 16 is provided on the first water collection line 8. In addition, an intermediate pump 17 is provided between the detection vessel 4A and each extraction line 11. Another pressure-adjusting valve 18 is provided on the reflux line 13. Further, it is also possible to adopt a constitution in which the pressure-adjusting valves 16 and 18 and the intermediate pump 17 are not provided.

In the water treatment device 100 as described above, first, when the water-feeding pump 1 is driven, the water to be treated is guided to the membrane separation unit 2 through the introduction line 5. In each main vessel 2A in the membrane separation unit 2, the water to be treated is separated into concentrated water and permeable water.

Here, in a device having a reverse osmosis membrane as in the main vessel 2A, impurities contained in the water to be treated may precipitate as scales on the surface of the reverse osmosis membrane due to fluctuation of a concentration of scale components in the water to be treated. Furthermore, it is also known that there are individual differences in performance in devices having a reverse osmosis membrane. That is, when a plurality of main vessels 2A are arranged in parallel, a state in which scales are precipitated in a specific main vessel 2A may occur, and meanwhile, scales are not precipitated in the other main vessel 2A.

Therefore, in the present embodiment, the main vessel 2A, in which the scales are most easily precipitated, is specified as the target vessel by the above-described selection unit 3, and only the concentrated water discharged from the target vessel is led to the detection vessel 4A. The presence or absence of precipitation of scale and the amount precipitation of scale are detected in the detection vessel 4A. That is, when scale is precipitated on the detection vessel 4A, it is possible to presume that the scale is also similarly precipitated on the target vessel.

The method for evaluating the performance of the water treatment device 100 will be described in detail with reference to Figs. 1 and 2. In evaluating the performance of the water treatment device 100, first, as illustrated in Fig. 2, a main vessel 2A having the highest concentration rate among the plurality of main vessels 2A is specified as a target vessel (specifying step S1). More specifically, the target vessel is specified on the basis of the flow rate of the permeable water measured by the flow rate meter 10 provided on each permeable water line 7. Here, the main vessel 2A having the largest flow rate of the permeable water can be determined to have the highest concentration rate. That is, here, the main vessel 2A having the largest flow rate of the permeable water is specified as the target vessel.

Subsequently, only the target vessel is connected to the detection vessel 4A by manipulating the on-off valve 12 as the selector 3. In other words, all the on-off valves 12 corresponding to the main vessels 2A other than the target vessel are closed. As a result, a part of the concentrated water (water to be detected) discharged from the target vessel flows into the detection vessel 4A through the extraction line 11.

In the detection vessel 4A, as described above, the water to be detected is separated again to generate the secondary concentrated water and the secondary permeable water. In the detection vessel 4A, an index of precipitation ease of scale in the water to be detected is detected (detecting step S2). More specifically, a minute change in the flow rate of the secondary permeable water is measured by the flow rate meter 15 provided on the downstream side of the detection vessel 4A (that is, the secondary permeable water line 14). When the flow rate of the secondary permeable water alters by decreasing, it is determined that scale has precipitated in the detection vessel 4A and the reverse osmosis membrane has become blocked.

Also, even when the attachment of the main vessel 2A is incomplete, this can be easily found using the above evaluation method. In the main vessel 2A which is incompletely installed, the flow rate of the permeable water may increase due to occurrence of leakage.

As described above, in the method for evaluating the performance of the water treatment device 100, in the specifying step S1, the main vessel 2A having the highest concentration rate among the plurality of main vessels 2A is specified as the target vessel. Here, it is possible to determine that a higher load is applied to the target vessel than the other main vessels 2A. That is, the scale is most easily precipitated in the target vessel among the plurality of main vessels 2A.

Therefore, in the subsequent detecting step S2, an index of the precipitation ease of scale in the water to be detected discharged from the target vessel is detected.

In this way, among the plurality of main vessels 2A, the main vessel 2A (the target vessel), in which the scale is most easily precipitated, is identified and the index of the precipitation ease of scale in the target vessel is monitored. Thus, the possibility of precipitation of scale can be detected at an early stage.

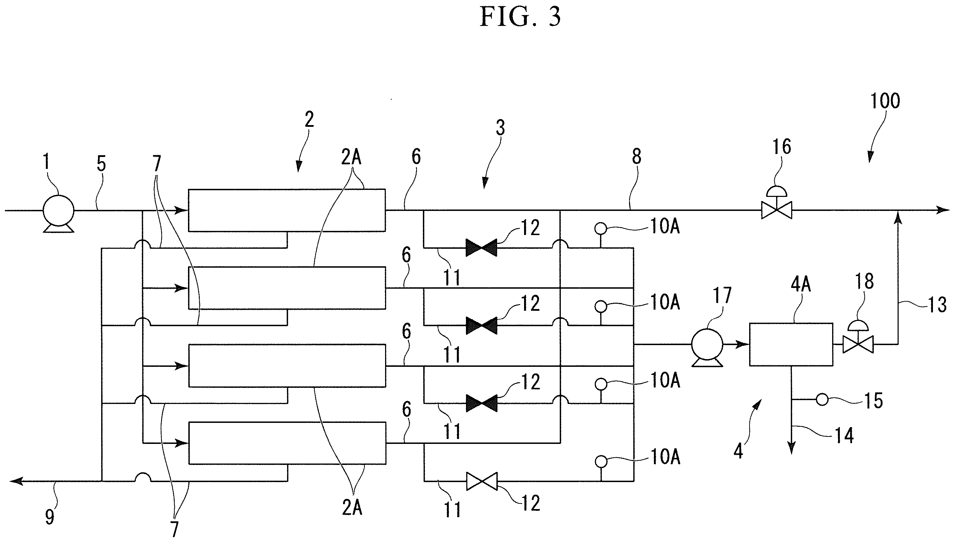

In the above configuration and method, the target vessel is specified on the basis of the measurement value of the flow rate meter 10 provided on the permeable water line 7. However, the configuration and method for specifying the target vessel are not limited to the above. As illustrated in Fig. 3, in place of the flow rate meter 10, a flow rate meter 10A that measures the flow rate of the concentrated water may be provided at a position on the extraction line 11 on the downstream side of the on-off valve 12. The flow rate meter 10A is used for detecting a change in the concentration rate of the main vessel 2A connected to each extraction line 11. Furthermore, in order to detect a change in the concentration rate of the main vessel 2A, it is also possible to use the electrical conductivity of the concentrated water as an index, instead of measurement of the flow rate using the flow rate meter 10A. Also with such a configuration, the target vessel can be easily specified. The flow rate and the electric conductivity may be continually measured by permanently installing the flow rate meter 10A or an electric conductivity meter, or these devices may be installed to perform measurement as necessary.

Furthermore, in the above configuration, the flow rate of the secondary permeable water was used by a flow rate meter 15 provided on the secondary permeable water line 14, as an index of the precipitation ease of scale of the water to be detected. However, instead of the flow rate of the secondary permeable water, it is also possible to use the density as an index of the precipitation ease of scale. In this case, it is desirable to provide a density meter in place of the flow rate meter 15.

### [Second Embodiment]

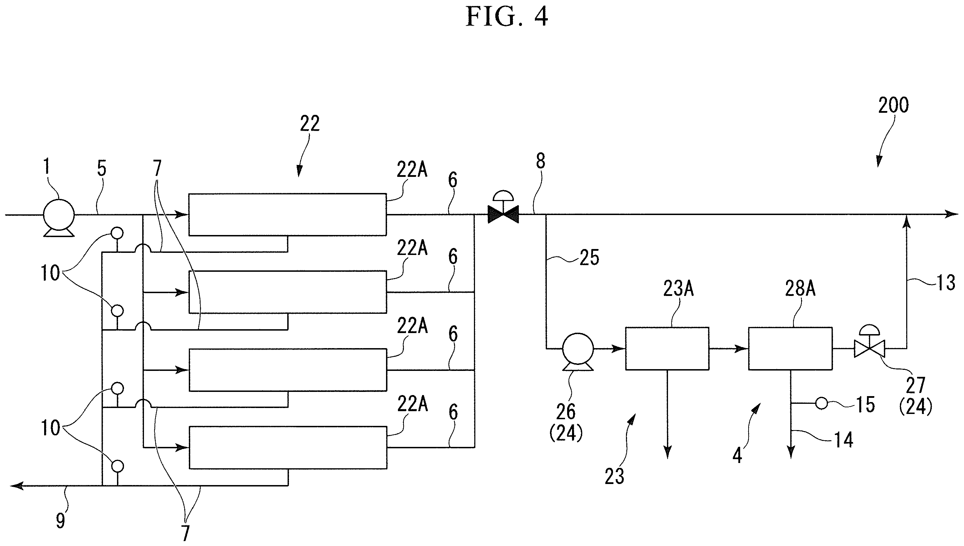

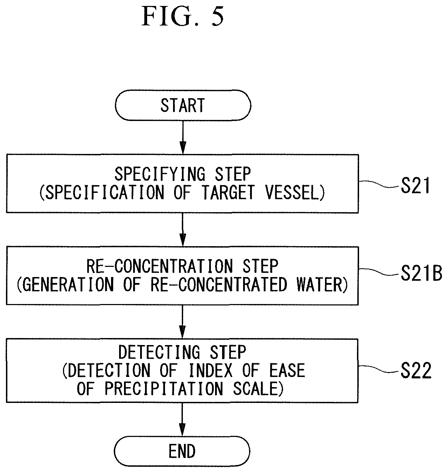

Next, a second embodiment of the present invention will be described with reference to Figs. 4 and 5. Components the same as those in the first embodiment are denoted using the same reference numerals, and detailed description thereof will not be provided. As illustrated in Fig. 4, a water treatment device 200 according to this embodiment includes a water-feeding pump 1, a membrane separation unit 22, a re-concentration unit 23, and a detection unit 4.

The membrane separation unit 22 has a plurality of main vessels 22A arranged in parallel with each other. That is, the concentrated water generated in each main vessel 22A is mixed in the first water collection line 8. A part of the concentrated water flowing through the first water collection line 8 flows toward the re-concentration unit 23 on the downstream side. The permeable water generated in each main vessel 22A mixes in the second water collection line 9 and then flows toward a storage facility or the like (not illustrated).

The re-concentration unit 23 includes a re-concentration vessel 23A different from the main vessel 22A, and a first concentration-adjusting unit 24. The re-concentration vessel 23A is connected to the first water collection line 8 by a re-concentration line 25. The re-concentration line 25 is a flow path which extracts a part of the concentrated water flowing through the first water collection line 8. The re-concentration vessel 23A is a device having a reverse osmosis membrane, like the above-described main vessel 22A. That is, the concentrated water supplied to the re-concentration vessel 23A is separated again.

The first concentration-adjusting unit 24 has an intermediate pump 26 and a pressure-adjusting valve 27. The intermediate pump 26 is provided on the re-concentration line 25. By changing the discharge amount of the intermediate pump 26, the flow rate of the concentrated water flowing on the re-concentration line 25 is adjusted. The pressure-adjusting valve 27 is provided on the flow path between the re-concentration vessel 23A and the detection unit 4. By changing the opening degree of the pressure-adjusting valve 27, the supply pressure of water to be supplied to the re-concentration vessel 23A is adjusted. That is, by changing the discharge amount of the intermediate pump 26 and the opening degree of the pressure-adjusting valve 27, the concentration of the concentrated water (re-concentrated water) discharged from the re-concentration vessel 23A is adjusted.

Further, on the downstream side of the re-concentration vessel 23A, a detection vessel 28A as the detection unit 4 is provided. The re-concentrated water discharged from the re-concentration vessel 23A is supplied to the detection vessel 28A. That is, the re-concentrated water introduced from the upstream side with respect to the detection vessel 28A is separated again by the reverse separation membrane to generate secondary concentrated water and secondary permeable water. The secondary concentrated water is returned into the first water collection line 8 through the reflux line 13. (It is also possible to recover the secondary concentrated water through another route without going through the reflux line 13 and the first water collection line 8). The secondary permeable water is sent to an external storage facility or the like through the secondary permeable water line 14. A flow rate meter 15 for measuring the flow rate of the secondary permeable water is provided on the secondary permeable water line 14.

In the aforementioned water treatment device 200, first, when the water-feeding pump 1 is driven, the water to be treated is guided to the membrane separation unit 22 through the introduction line 5. In each main vessel 22A of the membrane separation unit 22, the water to be treated is separated into concentrated water and permeable water.

Here, in the device having the reverse osmosis membrane like the main vessel 22A, impurities or scale components contained in the water to be treated may precipitate on the surface of the reverse osmosis membrane as scales, due to long-term use, fluctuation of scale component concentration in the water to be treated, and the like. Furthermore, it is also known that there are individual differences in performance in the device having the reverse osmosis membrane. That is, in a case where a plurality of main vessels 22A are arranged in parallel, there is a possibility that a scale is precipitated in the specific main vessel 2A, and meanwhile, scale is not precipitated in other main vessels 22A.

Therefore, in this embodiment, the main vessel 22A, in which scale is most easily precipitated, is specified as the target vessel, on the basis of the flow rate of the permeable water measured by the flow rate meter 10. Further, the re-concentration unit 23 generates water to be detected having a concentration corresponding to the concentration of the concentrated water discharged from the target vessel, and supplies the water to be detected to the detection vessel 28A. In the detection vessel 28A, the presence or absence of precipitation of scale is detected. That is, when the scale is precipitated on the detection vessel 28A, it is possible to presume that the scale is also similarly precipitated on the target vessel.

The method for evaluating the performance of the water treatment device 200 will be described in detail with reference to Figs. 4 and 5. In evaluating the performance of the water treatment device 200, as illustrated in Fig. 5, first, the main vessel 22A having the highest concentration rate among the plurality of main vessels 22A is specified as a target vessel (specifying step S21). More specifically, the target vessel is specified on the basis of the flow rate of the permeable water measured by the flow rate meter 10 provided on each permeable water line 7. Here, it is possible to determine that the concentration rate of the main vessel 22A having the largest flow rate of the permeable water is the highest. That is, here, the main vessel 22A having the largest flow rate of the permeable water is specified as the target vessel.

Here, in this embodiment, the concentrated water discharged from each main vessel 22A is mixed on the first water collection line 8. Therefore, in the re-concentration vessel 23A, the water to be detected having substantially the same concentration as that of the concentrated water of the target vessel is generated. In other words, in the re-concentration vessel 23A, the concentrated water is re-concentrated until the concentration becomes equal to that of the target vessel (re-concentration step S21B). Such an adjustment of concentration is performed by the above-described first concentration-adjusting unit 24. That is, by changing each of the discharge amount of the intermediate pump 26 and the opening degree of the pressure-adjusting valve 27, the concentration of the concentrated water (re-concentrated water) discharged from the re-concentration vessel 23A is adjusted. As a result, the water to be detected flows into the detection vessel 28A on the downstream side.

In the detection vessel 28A, the water to be detected is separated again to generate the secondary concentrated water and the secondary permeable water. In the detection vessel 28A, an index of the precipitation ease of scale in the water to be detected is detected (detecting step S22). More specifically, a minute change in the flow rate of the secondary permeable water is measured by the flow rate meter 15 provided on the downstream side of the detection vessel 28A (that is, the secondary permeable water line 14). When the flow rate of the secondary permeable water turns to decrease, it is determined that the scale precipitates in the detection vessel 28A and the reverse osmosis membrane is blocked.

As described above, in the method for evaluating the performance of the water treatment device 200, in the specifying step S1, the main vessel 22A having the highest concentration rate among the plurality of main vessels 22A is specified as the target vessel. Here, it is possible to determine that a high load is applied to the target vessel as compared with other main vessels 22A. That is, among the plurality of main vessels 22A, the scale is most easily precipitated in the target vessel.

Therefore, in the subsequent detecting step S22, an index of the precipitation ease of scale in the water to be detected discharged from the target vessel is detected.

In this way, among the plurality of main vessels 22A, the main vessel 22A (the target vessel), in which the scale is most easily precipitated, is specified and the index of the precipitation ease of scale in the target vessel is monitored. Thus, the possibility of precipitation of scale can be detected at an early stage.

Furthermore, according to the above configuration, in the re-concentration step S21B, the concentration of re-concentrated water is adjusted by the first concentration-adjusting unit 24. That is, the concentration of re-concentrated water is adjusted by changing the pressure at the time of re-concentration the concentrated water. In this way, it is possible to easily and precisely adjust the concentration of re-concentrated water simply, by changing at least one of the pressure and the flow rate when the concentrated water is concentrated again.

In addition, according to the configuration as described above, since the vessel (re-concentration vessel 23A) for re-concentrating the concentrated water is provided independently, it is possible to generate re-concentrated water with higher accuracy, for example, as compared to a case where re-concentration and detection are simultaneously performed in the subsequent detecting step S22.

In the above configuration and method, the target vessel is specified on the basis of the measurement value of the flow rate meter 10 provided on the permeable water line 7. However, the configuration and method for specifying the target vessel are not limited to the above. As in the first embodiment, instead of the flow rate meter 10, a flow rate meter 10A that measures the flow rate of concentrated water may be provided at a position on the extraction line 11 on the downstream side of the on-off valve 12. The flow rate meter 15 is used for detecting a change in the concentration rate of the main vessel 2A connected to each extraction line 11. Furthermore, in order to detect a change in the concentration rate of the main vessel 2A, it is also possible to use the electric conductivity of the concentrated water as an index, instead of measurement of the flow rate using the flow rate meter 10A. Even with such a configuration, the target vessel can be easily specified.

Furthermore, in the above configuration, the flow rate of the secondary permeable water was used as an index of the precipitation ease of scale of the water to be detected, by the flow rate meter 15 provided on the secondary permeable water line 14. However, instead of the flow rate of the secondary permeable water, it is also possible to use the density as an index of the precipitation ease of scale. In this case, it is desirable to provide a density meter in place of the flow rate meter 15.

### [Third Embodiment]

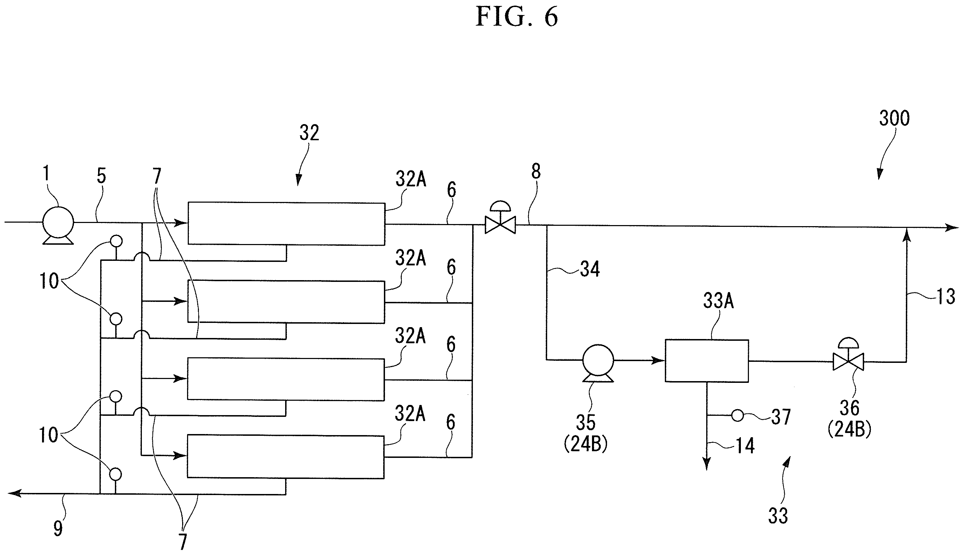

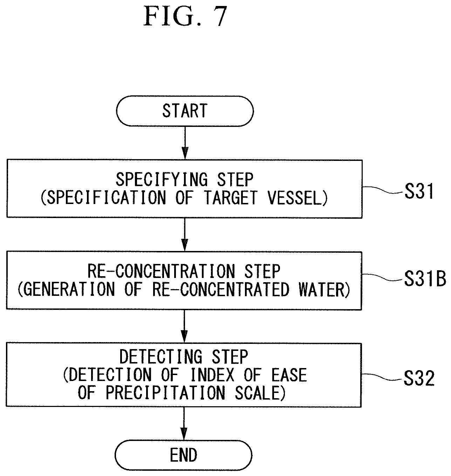

Subsequently, a third embodiment of the present invention will be described with reference to Figs. 6 and 7. The same configurations as those in each of the above embodiments are denoted by the same reference numerals, and a detailed description thereof will not be provided. As illustrated in Fig. 6, a water treatment device 300 according to the present embodiment includes a water-feeding pump 1, a membrane separation unit 32, a detection unit 33, and a second concentration-adjusting unit 24B.

The membrane separation unit 32 has a plurality of main vessels 32A arranged in parallel with each other. The concentrated water generated in each main vessel 32A is mixed in the first water collection line 8. A part of the concentrated water flowing through the first water collection line 8 flows toward the downstream side. The permeable water generated in each main vessel 32A mixes in the second water collection line 9 and then flows toward a storage facility or the like (not illustrated).

The detection unit 33 includes a concentration detection vessel 33A (concentration detection unit) different from the main vessel 32A. The concentration detection vessel 33A is a device having a reverse osmosis membrane. That is, the concentrated water supplied to the concentration detection vessel 33A is separated again. The concentration detection vessel 33A is connected to the first water collection line 8 by a detection line 34. The detection line 34 is a flow path for extracting a part of the concentrated water flowing through the first water collection line 8. Further, the concentration detection vessel 33A does not necessarily need to have a configuration as a vessel, and as another example, a configuration using a small RO membrane as a concentration detection unit is also conceivable.

The second concentration-adjusting unit 24B has an intermediate pump 35 and a pressure-adjusting valve 36. The intermediate pump 35 is provided on the detection line 34. By changing the discharge amount of the intermediate pump 35, the flow rate of the concentrated water flowing on the detection line 34 is adjusted. The pressure-adjusting valve 36 is provided on a flow path (a reflux line 13) between the concentration detection vessel 33A and the first water collection line 8. By changing the opening degree of the pressure-adjusting valve 36, the supply pressure of the concentrated water supplied to the concentration detection vessel 33A is adjusted. That is, by changing each of the discharge amount of the intermediate pump 35 and the opening degree of the pressure-adjusting valve 36, the concentration of the concentrated water discharged from the concentration detection vessel 33A is adjusted.

The concentrated water introduced from the upstream side with respect to the concentration detection vessel 33A is separated again by the reverse separation membrane to generate secondary concentrated water and secondary permeable water. The secondary concentrated water is returned into the first water collection line 8 through the reflux line 13. The secondary permeable water is sent to an external storage facility or the like through the secondary permeable water line 14. A flow rate meter 37 for measuring the flow rate of the secondary permeable water is provided on the secondary permeable water line 14.

In the water treatment device 300 as described above, first, by driving the water-feeding pump 1, the water to be treated is guided to the membrane separation unit 32 through the introduction line 5. In each main vessel 32A in the membrane separation unit 32, the water to be treated is separated into concentrated water and permeable water.

Here, in the device having the reverse osmosis membrane such as the main vessel 32A, when used for a long period, in some cases, impurities or scale components contained in the water to be treated are crystallized and precipitated on the surface of the reverse osmosis membrane. Furthermore, it is also known that there are individual differences in performance in the device having the reverse osmosis membrane. That is, when a plurality of main vessels 32A is used by being disposed in a parallel, there is a state in which a scale is precipitated in a specific main vessel 32A, and meanwhile, a condition in which the scale is not precipitated in other main vessels 32A occurs.

Therefore, in the present embodiment, the main vessel 32A, in which the scale is most easily precipitated, is specified as the target vessel, on the basis of the flow rate of the permeable water measured by the flow rate meter 10. In the concentration detection vessel 33A, the concentrated water is concentrated until the concentration of the concentrated water becomes equal to the concentration (membrane interface concentration) of the target vessel. At the same time, the presence or absence of precipitation of scale and the precipitation of scale amount are detected on the basis of the flow rate of the permeable water flowing through the secondary permeable water line 14. That is, when scale is precipitated on the concentration detection vessel 33A, it is possible to presume that scale is also similarly precipitated on the target vessel.

The method for evaluating the performance of the water treatment device 300 will be described in detail with reference to Figs. 6 and 7. In evaluating the performance of the water treatment device 300, as illustrated in Fig. 6, first, the main vessel 32A having the highest concentration rate among the plurality of main vessels 32A is specified as a target vessel (specifying step S31). More specifically, the target vessel is specified on the basis of the flow rate of the permeable water measured by the flow rate meter 10 provided on each permeable water line 7. Here, the main vessel 32A having the largest flow rate of the permeable water can be determined to have the highest concentration rate. That is, here, the main vessel 32A having the largest flow rate of the permeable water is specified as the target vessel.

Here, in this embodiment, the concentrated water discharged from each main vessel 32A is mixed on the first water collection line 8. As a result, in the concentration detection vessel 33A, the membrane surface concentration becomes equal to that of the target vessel. That is, the water to be detected having substantially the same concentration as the above concentrated water of the target vessel is generated. In other words, in the concentration detection vessel 33A, the concentrated water is concentrated again until the concentration becomes equal to that of the target vessel (re-concentration step S31B). As a result, the membrane interface concentration on the surface of the reverse osmosis membrane in the concentration detection vessel 33A has the same concentration as that of the target vessel. Such an adjustment of concentration is performed by the above-described second concentration-adjusting unit 24B. That is, by changing each of the discharge amount of the intermediate pump 35 and the opening degree of the pressure-adjusting valve 36, the concentration of the concentrated water discharged from the concentration detection vessel 33A is adjusted.

Further, in the concentration detection vessel 33A, the water to be detected is separated again to generate the secondary concentrated water and the secondary permeable water. In the concentration detection vessel 33A, an index of the precipitation ease of scale in the water to be detected is detected (detecting step S32). More specifically, a minute change in the flow rate of the secondary permeable water is measured by the flow rate meter 37 provided on the downstream side of the concentration detection vessel 33A (that is, the secondary permeable water line 14). When the flow rate of the secondary permeable water turns to decrease, it is determined that the scale precipitates in the concentration detection vessel 33A and the reverse osmosis membrane is blocked.

Here, in the case where a small RO membrane is used as the concentration detection unit, when scale is precipitated in the concentration detection vessel 33A, it is presumed that precipitation of scales also occurs in the target vessel in the same manner.

As described above, in the method for evaluating the performance of the water treatment device 300, in the specifying step S31, the main vessel 32A having the highest concentration rate among the plurality of main vessels 32A is specified as the target vessel. Here, it is possible to determine that a higher load is applied to the target vessel than other main vessels 32A. That is, the scale is most easily precipitated in the target vessel among the plurality of main vessels 32A.

In this way, the main vessel 32A (the target vessel), in which the scale is most easily precipitated, is specified among the plurality of main vessels 32A, and the index of the precipitation ease of scale in the target vessel is monitored. Therefore, the possibility of precipitation of scale can be detected at an early stage.

Furthermore, according to this configuration, it is possible to simultaneously adjust the concentration of the concentrated water and detect the index of the precipitation ease of the scale by the concentration detection vessel 33A. That is, by simplifying the configuration of the device, manufacturing cost and maintenance cost can be reduced.

In the above configuration and method, the target vessel is specified on the basis of the measurement value of the flow rate meter 10 provided on the permeable water line 7. However, the configuration and method for specifying the target vessel are not limited to the above. As illustrated in Fig. 3, in place of the flow rate meter 10, a flow rate meter 10A that measures the flow rate of the concentrated water may be provided at a position on the extraction line 11 on the downstream side of the on-off valve 12. The flow rate meter 10A is used for detecting a change in the concentration rate of the main vessel 2A connected to each extraction line 11. Furthermore, in order to detect a change in the concentration rate of the main vessel 2A, it is also possible to use the electric conductivity of the concentrated water as an index, instead of measurement of the flow rate using the flow rate meter 10A. Even with such a configuration, the target vessel can be easily specified.

Furthermore, in the above configuration, the flow rate of the secondary permeable water was used as an index of the precipitation ease of scale of the water to be detected, by the flow rate meter 37 provided on the secondary permeable water line 14. However, instead of the flow rate of the secondary permeable water, it is also possible to use the density as an index of the precipitation ease of scale. In this case, it is desirable to provide a density meter instead of the flow rate meter 37.

Each embodiment of the present invention has been described above with reference to the drawings. The above configuration is merely an example, and it is possible to make various changes to the configuration.

For example, in each of the embodiments described above, an example in which the membrane separation unit 2 (the membrane separation unit 22, and the membrane separation unit 32) has four main vessels 2A (the main vessel 22A, and the main vessel 32A) has been described. However, the number of the main vessels 2A (the main vessel 22A, and the main vessel 32A) is not limited to four, and may be two or five or more.

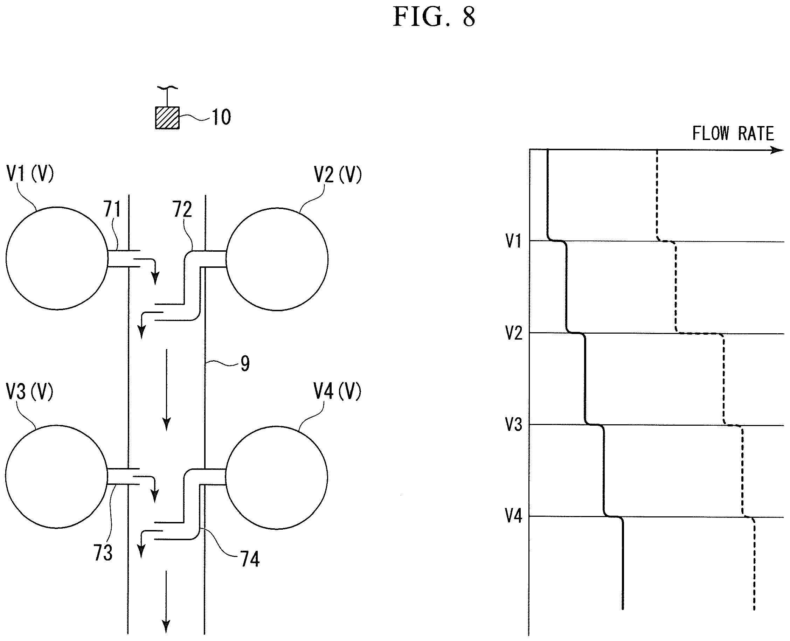

Furthermore, in each of the above embodiments, as the configuration of the flow rate meter 10 provided on the permeable water line 7, for example, an example illustrated in Fig. 8 can be considered. Fig. 8 is a view of the water treatment device 400 as viewed from the extending direction of the main vessels V each formed in a rod shape.

As illustrated in Fig. 8, one permeable water line 7 extends from each of a plurality (four) of main vessels V1, V2, V3, and V4. The permeable water lines 7 join the second water collection line 9. The second water collection line 9 extends in the vertical direction. In the second water collection line 9, the permeable water flows from the upper side to the lower side.

Among the four main vessels V, the main vessel V1 and the main vessel V2 are disposed on both sides across the second water collection line 9. Similarly, the main vessel V3 and the main vessel V4 are disposed on both sides across the second water collection line 9.

Furthermore, the outlet of the permeable water line 72 extending from the main vessel V2 is disposed below the outlet of the permeable water line 71 extending from the main vessel V1. Similarly, the outlet of the permeable water line 74 extending from the main vessel V4 is disposed below the outlet of the permeable water line 73 extending from the main vessel V3. In other words, the outlets of the four permeable water lines 71, 72, 73 and 74 are arranged in order from the upper side to the lower side along the second water collection line 9.

The flow rate meter 10 is provided above the second water collection line 9 (i.e., above the outlet of the permeable water line 71). As a specific aspect of the flow rate meter 10, for example, a laser Doppler flow rate meter is suitable.

In the aforementioned configuration, the flow rate distribution of the permeable water measured on the second water collection line 9 illustrates a stepped increase tendency from the upper side to the lower side, as indicated by a solid line in the graph of Fig. 8.

On the other hand, when there is variation in the flow rate of the permeable water between the main vessels V1, V2, V3, and V4 (that is, when there is variation in the concentration rates of the main vessels V1, V2, V3, and V4), the variation is reflected in the flow rate distribution. Specifically, as indicated by a broken line in the graph of Fig. 8, the value of flow rate illustrates a sharp increase in a partial main vessel V. The main vessel V illustrating the increase is specified as a target vessel in each of the aforementioned embodiments. According to the above configuration, the target vessel can be easily determined.

It is also possible to use a TDS meter in place of the flow rate meter 10 as described above. Specifically, an aspect in which the TDS meter is provided at the outlets of each of the permeable water lines 71, 72, 73, 74 is conceivable. The TDS (Total Disolved Solid) is an index illustrating concentration of substances such as carbonate, bicarbonate, chloride, sulfate, calcium, magnesium, sodium, and organic ions in the permeable water. The TDS meter is a device that directly measures the conductivity of current in the permeable water. The TDS meter represents the measured conductivity of the current by replacing the conductivity with ppm which is the concentration unit of the electrolytic substance.

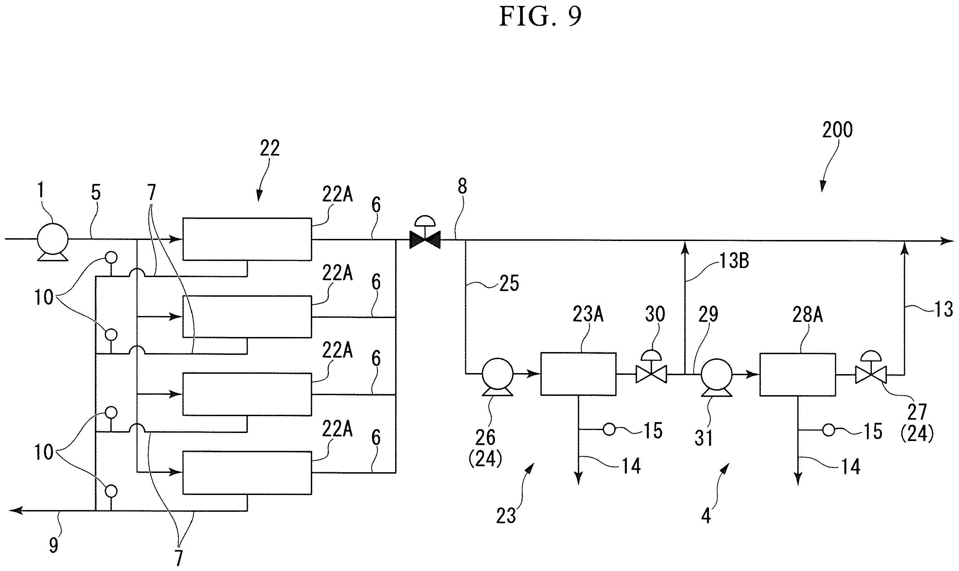

Furthermore, as a modified example of the above-described second embodiment, it is also possible to adopt a configuration as illustrated in Fig. 9. In the configuration illustrated in Fig. 9, a pressure-adjusting valve 30 and a pump 31 are provided on a connecting line 29 which connects the re-concentration unit 23 (re-concentration vessel 23A) and the detection unit 4 (detection vessel 28A). Furthermore, an intermediate reflux line 13B which connects a region between the pressure-adjusting valve 30 and the pump 31 with the first water collection line 8 is provided. In addition, a flow rate meter 15 is also provided on the permeable water line discharged from the re-concentration vessel 23A. Even with such a configuration, it is possible to obtain the same operational effect as the second embodiment.

### [Industrial Applicability]

According to the above configuration, it is possible to provide a water treatment device performance evaluation method and a water treatment device capable of more accurately evaluating performance.

### [Reference Signs List]

100, 200, 300 Water treatment device
1 Water-feeding pump
2 Membrane separation unit
3 Selection unit
4 Detection unit
5 Introduction line
2A Main vessel
6 Concentrated water line
7 Permeable water line
8 First water collection line
9 Second water collection line
10 Flow rate meter
11 Extraction line
12 On-off valve
4A Detection vessel
13 Reflux line
13B Intermediate reflux line
14 Secondary permeable water line
15 Flow rate meter
16 Pressure-adjusting valve
17 Intermediate pump
18 Pressure-adjusting valve
S1, S21, S31 Specifying step
S2, S22, S32 Detecting step
S21B, S31B Re-concentration step
10A Flow rate meter
22 Membrane separation unit
23 Re-concentration unit
22A Main vessel
23A Re-concentration vessel
24 First concentration-adjusting unit
25 Re-concentration line
26 Intermediate pump
27 Pressure-adjusting valve
28A Detection vessel
29 Connection line
30 Pressure-adjusting valve
31 Pump
32 Membrane separation unit
33 Detection unit
32A Main vessel
33A Concentration detection vessel
34 Detection line
35 Intermediate pump
36 Pressure-adjusting valve
37 Flow rate meter
V, V1, V2, V3 Main vessel

## Claims

1. A method for evaluating the performance of a water treatment device including a plurality of main vessels arranged in parallel to each other and having a reverse osmosis membrane configured to separate water to be treated into concentrated water and permeable water, the method comprising:
a specifying step of specifying a main vessel having the highest concentration rate among the plurality of main vessels as a target vessel; and
a detecting step of detecting an index of precipitation ease of scale in water to be detected having a concentration corresponding to a concentration of the concentrated water discharged from the target vessel.

2. The method for evaluating the performance of the water treatment device according to Claim 1, wherein the water to be detected is concentrated water discharged from the target vessel.

3. The method for evaluating the performance of the water treatment device according to Claim 1, further comprising:
a re-concentration step of re-concentrating the concentrated water which is discharged from the plurality of main vessels and mixed,
wherein the water to be detected is re-concentrated water obtained in the re-concentration step.

4. The method for evaluating the performance of the water treatment device according to Claim 3, wherein, in the re-concentration step, the concentration of the re-concentrated water is adjusted by changing at least one of a pressure and a flow rate when the concentrated water is concentrated again.

5. The method for evaluating the performance of the water treatment device according to Claim 3, wherein, in the re-concentration step, the concentration of the re-concentrated water is adjusted by changing at least one of a pressure and a flow rate when the concentrated water is concentrated again.

6. The method for evaluating the performance of the water treatment device according to any one of Claims 1 to 5, wherein, in the specifying step, the target vessel is specified on the basis of the flow rate of the concentrated water concentrated in each of the main vessels or the flow rate of the permeable water separated by the main vessels.

7. The method for evaluating the performance of the water treatment device according to any one of Claims 1 to 5, wherein, in the specifying step, the target vessel is specified on the basis of electrical conductivity of the concentrated water concentrated in each of the main vessels.

8. The method for evaluating the performance of the water treatment device according to any one of Claims 1 to 7, wherein the index is the flow rate of the water to be detected.

9. The method for evaluating the performance of the water treatment device according to any one of Claims 1 to 7, wherein the index is the density of the water to be detected.

10. A water treatment device, comprising:
a plurality of main vessels disposed in parallel to each other and having a reverse osmosis membrane configured to separate water to be treated into concentrated water and permeable water;
a selection unit which selects a main vessel having the highest concentration rate among the respective main vessels as a target vessel; and
a detection unit which detects an index of precipitation ease of scale in the concentrated water discharged from the target vessel.

11. A water treatment device, comprising:
a plurality of main vessels disposed in parallel to each other and having a reverse osmosis membrane configured to separate water to be treated into concentrated water and permeable water;
a re-concentration unit which re-concentrates concentrated water, which is discharged from the plurality of main vessels and is mixed, to a concentration corresponding to a concentration of the concentrated water discharged from the main vessel having the highest concentration ratio among the main vessels, thereby generating re-concentrated water; and
a detection unit which detects an index of precipitation ease of scale in the re-concentrated water,
wherein the re-concentrated water has
a re-concentration vessel which has a reverse osmosis membrane and generates the re-concentrated water, and
a first concentration-adjusting unit which adjusts the concentration of the re-concentrated water, by changing at least one of a supply pressure and a flow rate of the concentrated water to the re-concentration vessel.

12. A water treatment device, comprising:
a plurality of main vessels disposed in parallel to each other and having a reverse osmosis membrane configured to separate water to be treated into concentrated water and permeable water;
a concentration detection vessel which mixes the concentrated water discharged from the plurality of main vessels, then re-concentrates the mixed concentrated water to discharge the re-concentrated water, and detects an index of precipitation ease of scale in the re-concentrated water; and
a second concentration-adjusting unit which adjusts a concentration of the concentrated water by changing at least one of a pressure and a flow rate of the concentrated water to the concentration detection vessel.
